# NEUE EUROPÄISCHE PATENTSCHRIFT

(11) **EP 1 525 396 B2**
(45) Veröffentlichungstag und Bekanntmachung des Hinweises auf die Entscheidung über den Einspruch: **18.01.2017**
(45) Hinweis auf die Patenterteilung: 05.09.2007
(21) Anmeldenummer: 03787656.2
(22) Anmeldetag: 11.07.2003
(51) Int. Cl.: F03D 13/00, F03D 9/00, H02K 9/10

(54) **WINDTURBINE MIT EINEM GESCHLOSSENEN KÜHLKREISLAUF**
WIND TURBINE COMPRISING A CLOSED COOLING CIRCUIT
TURBINE EOLIENNE A CIRCUIT DE REFROIDISSEMENT FERME

(30) Priorität: 25.07.2002 DE 10233947
(43) Veröffentlichungstag der Anmeldung: 27.04.2005
(73) Patentinhaber: Siemens Aktiengesellschaft, 80333 München (DE)
(72) Erfinder: KRÜGER-GOTZMANN, Manfred, 10589 Berlin (DE); SCHILLER, Christian, 12277 Berlin (DE); ZWARG, Günter, 14052 Berlin (DE)
(86) Internationale Anmeldenummer: PCT/DE2003/002355
(87) Internationale Veröffentlichungsnummer: WO 2004/016945

(56) Entgegenhaltungen:
- WO-A-01/21956
- WO-A-99/30031
- WO-A1-01/21956
- DE-A- 10 000 370
- DE-A- 19 802 574
- US-A- 5 844 333

## Beschreibung

Die Erfindung betrifft eine Windkraftanlage mit einem in einer Gondel angeordneten Generator, einer Turbine mit zumindest einem Rotorblatt, wobei der Generator einen Kühlkreislauf aufweist.

Bei Umformung von Energie entstehen naturgemäß Verluste in Form von Wärme. Diese Verlustwärme tritt sowohl bei der Umformung der kinetischen Energie des Windes in elektrischen Energie im Generator einer Windkraftanlage auf, als auch bei der elektrischen Einspeisung der von der Windkraftanlage erzeugten Energie in ein elektrisches Versorgungsnetz. Diese Verlustwärme tritt bei den anderen elektrischen Betriebsmitteln, insbesondere der Leistungselektronik wie z.B. Wechselrichter oder Transformatoren auf. Ebenso tritt Wärme bei anderen Komponenten einer Windkraftanlage auf wie z.B. Getriebe, Lagern oder Steuereinheiten wie z.B. Hydraulikanlagen oder vergleichbaren Steuer- und Regelungseinrichtungen, mittels denen die Rotorblätter angestellt oder die Windkraftanläge zum Wind gestellt wird.

Die Verluste betragen dabei ca. 5 bis 7% der installierten Nennleistung.

Diese Wärmeverluste werden bislang über Lüfter an die Umgebung abgeführt. Dabei wird mittels der Lüfter kalte Luft von außen angesaugt und das entsprechende Bauteil, z.B. der Generator gekühlt. Die erwärmte Luft wird anschließend wieder nach außen abgeführt. Dies ist insbesondere nachteilig, wenn die Außenluft feucht oder insbesondere in Küstenregionen salzhaltig ist und die zu kühlenden Elemente mit dieser feuchten und salzhaltigen Luft beaufschlagt werden.

Aus der DE 198 02 574 A1 ist eine Windkraftanlage bekannt, bei der insbesondere der Generator durch einen Luftstrom gekühlt wird, der durch einen an einer Mündung eines Rotorblatts entstehenden Unterdruck erzeugt wird. Durch diesen Unterdruck ergibt sich ein Druckgefälle zwischen jeder Mündung eines Rotorblatts und einer Öffnung an der dem Rotorblatt abgewandten Seite der Gondel. Dadurch wird an der Öffnung Umgebungsluft entgegen der eigentlichen Windrichtung angesaugt, welche über den Strömungsweg durch die Gondel und durch das Innere eines Rotorblatts bis zur Mündung dieses Rotorblatts strömt. Nachteilig dabei ist, dass es sich um eine Durchzugslüftung handelt, die insbesondere bei Off-shore-Aufstellung die Nachteile der salzhaltigen Luft beinhaltet. Außerdem ergeben sich durch die Mündungen an den Rotorblättern Geräuschprobleme.

Aus der DE 199 47 915 A1 ist ein Kühlsystem zur Kühlung verlustbehafteter Baugruppen insbesondere einer Windkraftanlage beschrieben. Damit wird versucht durch die Kaminwirkung aller erwärmter Luft die Kühlung der Baugruppen am Fußende des Turmes als auch oben in der Gondel zu lösen. Nachteilig dabei ist, dass der Turmquerschnitt mit Kanälen bereits belegt ist. Des Weiteren handelt es sich um eine Durchzugsbelüftung, die ebenso anfällig für Schmutz und Luftfeuchtigkeit ist und insbesondere somit für den Betrieb nicht geeignet ist.

Aus der US 2001/0035651 A1 ist bekannt, die Verlustleistung des Generators durch direkte Wärmeleitung zur Außenhaut der Gondel, welche mit Rippen zur Oberflächenvergrößerung ausgestattet ist an die Umgebungsluft abzuführen. Damit wird zwar die mit der Dürchzugsbelüftung behandelten Nachteile (feuchte und schmutzige Luft dringt in elektrische Betriebsmittel ein) vermieden, es lassen sich damit aber nur kleinere Verlustleistungen abführen.

Aus der WO-A-99/30031 ist eine Windkraftanlage bekannt mit einem in einer Gondel angeordneten Generatorturbine mit zumindest einem Rotorblatt wobei zumindest der Generator einen geschlossenen Primärkreislauf aufweist, und wobei die Gondel Mittel hat, die eine Kühlung des Primärkreislaufs ermöglichen.

Aus der US-A-5 844333 ist ein Luft-Luft-Wärmetauscher für elektrische Maschinen bekannt.

Der Erfindung liegt demnach die Aufgabe zugrunde eine Windkraftanlage zu schaffen, die mit einer zuverlässigen Kühlung ausgestattet ist, so dass insbesondere auch im Off-shore-Betrieb sowohl Wartungseinsätze als auch Ausfälle durch verschmutzte oder salzhaltige Kühlluft vermieden werden.

Die Lösung der gestellten Aufgabe gelingt durch die Merkmale des Anspruchs 1.

Die Kühlung durch den Primärkreislauf ist nicht nur auf den Generator begrenzt, sondern schließt vorteilhafterweise auch andere elektrische Betriebsmittel bzw. Umrichter, Schleifringkörper des Generator mit ein.

Durch die erfindungsgemäße Trennung von Primär- und Sekundärkühlkreislauf ist der Aufstellungsort dieser Windkraftanlage unabhängig von ungünstigen äußeren Bedingungen. D.h. auch im Off-shore-Bereich bei feuchter salzhaltiger Luft ist aufgrund eines internen gekapselten Primär-Kühlkreislaufsystems eine ausreichende Kühlung durch den Wind an der Gondel gewährleistet. Die an der Gondel auftretenden Luftgeschwindigkeiten sind windstärkeabhängig, wobei systembedingt ein proportionaler Zusammenhang zwischen Windstärke und Generatorleistung bzw. Generatorverlusten besteht.

Vorteilhafterweise ist die Gondel dabei als sekundärer Luftkühler ausgeführt, so dass sich ein Luft-Luftkühler ergibt.

In einer bevorzugten Ausführung ist der sekundäre Luftkühler als Rohrbündel ausgeführt, der einen Wärmeaustausch gestattet das an der Gondel angebracht oder Teil der Gondel ist. Vorteilhafterweise ist dabei das Rohrbündel in der oberen Hälfte um die Gondel angebracht. Die erwärmte Luft vom Generator oder anderen elektrischen Betriebsmitteln, die an den Primär-Kühlkreislauf angeschlossen sind steigt auf oder wird durch Lüfter in die zwischen den Rohrbündel vorhandenen Zwischenräume eingeleitet und dort durch den durch das Rohrbündel streichenden Wind gekühlt. Durch natürliche Konvektion oder durch einen weiteren Lüfter wird die gekühlte Luft des Primär-Kreislaufs dem Generator oder weiteren in der Gondel befindlichen elektrischen Betriebsmitteln zur Kühlung erneut zugeführt. Dadurch, dass das Rohrbündel sich an der Gondel befinden, ist gewährleistet, dass die Rohre des Bündels mit ihrer Achse immer parallel zur Windrichtung ausgerichtet sind, so dass eine ausreichende Kühlwirkung durch die vorhandenen Windgeschwindigkeiten und damit den vorhandenen Luftdurchsatz des Rohrbündels gewährleistet ist. Das Rohrbündel bildet den Wärmetauscher zwischen dem Primär- und Sekundär-Kreislauf.

Um den Wärmeübergang besonders effizient zu gestalten, weisen die Rohre oberflächenyergrößernde Strukturen auf.

Ein großer Vorteil dieser sämtlichen Ausführungen gegenüber einer Maschine mit Luft-Wasser-Kühlern besteht in dem unabhängigen weitgehend wartungsfreien und betriebssicheren System, welches ohne zusätzliches aufzubereitendes Kühlmittel in großer Höhe auskommt. Es fallen lediglich geringe Wartungs- und keine Betriebsmittelkosten an. Die erfindungsgemäße Ausführung einer Windkraftanlage ist vergleichsweise kompakt und wartungsarm. Deshalb sind auch gegenüber Windkraftanlagen mit Durchzugsbelüftung insbesondere der Generatoren weniger Ausfälle durch feuchte oder salzhaltige Luft zu erwarten.

Durch die erwärmte Abluft des Primär-Kühlkreislaufs kann die Gondel, Rotorblätter, insbesondere in der kalten Jahreszeit auch beheizt werden. Dadurch wird Kondensatbildung an elektrischen Betriebsmitteln und Eisbildung an den Rotorblättern vermieden.

Die Erfindung sowie weitere vorteilhafte Ausgestaltungen der Erfindung gemäß Merkmale der Unteransprüche werden im folgenden anhand schematisch dargestellter Ausführungsbeispiele in der Zeichnung näher erläutert. Dabei zeigen:
- FIG 1 und 3: Längsschnitte der erfindungsgemäßen Windkraftanlage,
- FIG 2 und 4: Querschnitte der erfindungsgemäßen Windkraftanlage.

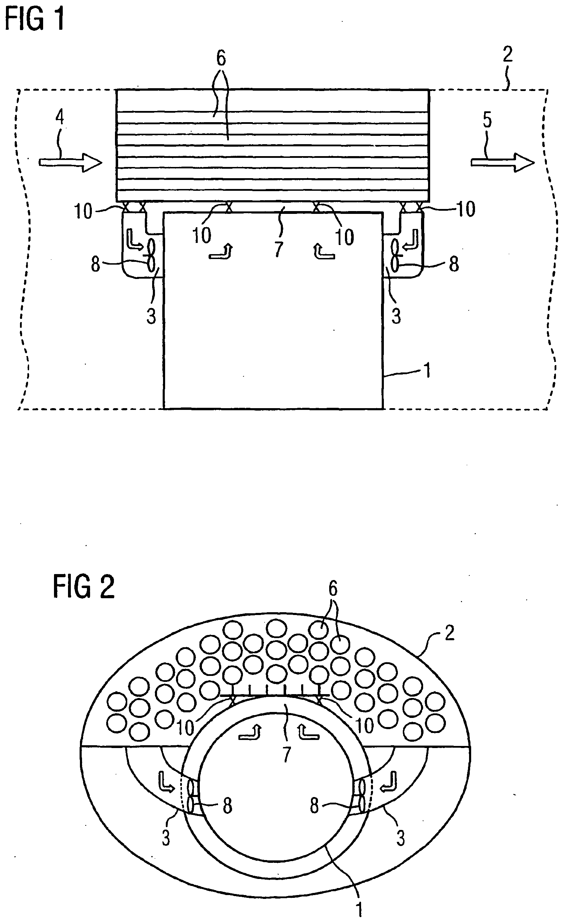

FIG 1 zeigt eine Wärmequelle 1, die in einer Gondel 2 angeordnet ist. Die Gondel 2 befindet sich auf einem nicht näher dargestellten Turm einer Windkraftanlage. Die Wärmequelle 1 kann insbesondere ein Generator oder sonstige nicht näherdargestellte elektrische Betriebsmittel wie z.B. Stromrichter, Schleifringraum des Generators sein. Bei dem nicht näher dargestellten Generator ist das Blechpaket des Stators und/oder des Läufers in an sich bekannter Weise radial und/oder axial mit Lüftungskanälen durchsetzt. Des Weiteren kann die Luft des Primärkühlkreislaufes den Luftspalt des Generators durchströmen.

Oberhalb der Wärmequelle 1 befindet sich in der Gondel 2 ein System von Rohrbündeln 6. Dieses System befindet sich vorteilhafterweise auf der Oberseite der Gondel 2. Die Rohrbündel 6 werden in axialer Richtung von dem an der Gondel 2, die Rotorblätter antreibenden Wind durchströmt. Der Wind tritt dabei am Einlass 4 der Rohrbündel 6 in das System ein und tritt erwärmt am Auslass 5 der Rohrbündel 6 aus. Zwischen Einlass 4 und Auslass 5 der Rohrbündel 6 findet die thermische Übertragung also der Wärmeaustausch der in der Luft des Primär-Kühlkreislaufes vorhandenen Wärme der Wärmequelle 1 an den durch das System der Rohrbündel 6 streichenden Wind statt. Dabei tritt die erwärmte Luft aus der Wärmequelle 1 über einen Ausgang 7 in das System der Rohrbündel 6 ein, wird dort abgekühlt und durch Konvektion und/oder Lüfter 8 der Wärmequelle 1 gekühlt wiederum zugeführt. Die Übergänge 10 bezeichnen die Übergänge zwischen Primär-Kühlkreislauf und dem als Wärmetauscher ausgebildeten Rohrbündel 6.

FIG 2 zeigt die Anordnung der Rohrbündel 6 in der Gondel 2. Die jeweiligen Rohre der Rohrbündel 6 sind zylinderförmig ausgebildet. Sie sind vorteilhafterweise mit oberflächenvergrößerten Strukturen zu versehen um die Kühleffizienz zu steigern. Des Weiteren wird durch die Drehbewegung der Gondel 2 ermöglicht, dass die Rohrbündel 6 aufgrund der Ausrichtung der nicht näher dargestellten Rotorblätter der Windkraftanlage achsparallel zur Windrichtung ausgerichtet sind. Damit wird der Luftdurchsatz durch die Rohrbündel 6 erhöht und somit die Kühleffizienz gesteigert.

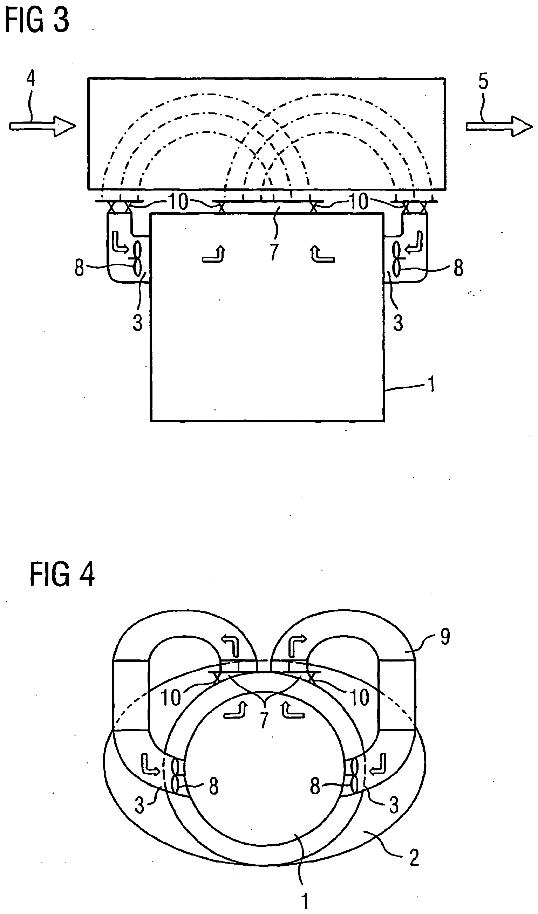

FIG 3 zeigt in einer weiteren Ausführungsform eine Wärmequelle 1 deren Ausgang 7 als henkelförmig, rohrförmiger Abschnitt 9 außerhalb der Gondel führen und in die Wärmequelle 1 über den Eingang 3 rückgeführt werden. Der Wärmetransport dieses Primärkühlkreislaufes geschieht ebenfalls durch natürliche Konvektion und/oder Lüfter 8. Die rohrförmigen Abschnitte 9 können auch aus Einzelteilen vor Ort zusammengesetzt werden.

FIG 4 zeigt im Querschnitt die prinzipielle Anordnung des Rohrsystems des Primärkühlkreislaufs der Wärmequelle 1 deren Rohre sich im Wind befinden, und vorzugsweise mit nicht näher dargestellten oberflächenvergrößernden Strukturen ausführbar sind. Die Konvektion der erwärmten Luft im Primärkühlkreislauf wird dadurch erleichtert, dass im oberen Teil der Gondel die Ausgang 7 und im mittleren Teil oder unteren Teil der Gondel die Eingang 3 der Rohre angeordnet sind.

Durch die erfindungsgemäße Gestaltung der Windkraftanlage ergeben sich gegenüber den bisherigen Kühlsystemen einer Windkraftanlage folgende Vorteile: Es ist kein Wasserzwischenkreis einschließlich der Generator Luft-Wasser-Kühler notwendig. Mit einem außerhalb der Wärmequelle 1 liegenden Luft-Luftkühler wird Platz in der beengten Gondel 2 geschaffen. Die Betriebssicherheit wird gegenüber herkömmlichen Systemen wesentlich erhöht und der Wartungsaufwand dabei gleichzeitig vermindert. Es ist keine Kühlwasserversorgung und keine Kühlwasseraufbereitung und Überwachung notwendig. Der Energieverbrauch von Sekundäreinrichtungen wie z.B. Wasserpumpe, Überwachungseinrichtungen wird vermindert. Durch die erwärmte Luft des Primä-Kühlkreislaufes ist die Gondel 2 auch beheizbar. Ebenso kann durch die erwärmte Luft des Primär-Kühlkreislaufes auch die Rotorblätter geheizt werden, so dass insbesondere im Winter Vereisungsprobleme vermieden werden. Dabei sind vorteilhafterweise Ventilatoren erforderlich, um die erforderliche Umluftbewegung zu schaffen.

Gegenüber herkömmlichen durchzugsbelüfteten Windkraftanlagen unterscheidet sich die gemäß unserer Erfindung ebenfalls durch eine hohe Betriebssicherheit, da keine feuchte Luft und salzhaltige Luft in den Betriebsraum der elektrischen Betriebsmittel geführt wird.

## Patentansprüche

1. Windkraftanlage, mit einem in einer Gondel (2) angeordneten Generator (1), einer Turbine mit zumindest einem Rotorblatt, wobei zumindest der Generator (1) einen geschlossenen Primär-Kühlkreislauf aufweist, und wobei die Gondel (2) Mittel aufweist, die eine Kühlung des Primär-Kühlkreislaufs ermöglicht,
**dadurch gekennzeichnet, dass**
der Übergang zwischen primären und sekundären Kühlkreislauf mittels eines Wärmetauschers erfolgt, der als Rohrbündel ausgeführt ist, wobei das Rohrbündel parallel zur Windrichtung ausrichtbar ist, derart, dass der Luftdurchsatz durch die Rohrbündel (6) erhöht und somit die Kühleffizienz gesteigert wird.

2. Windkraftanlage nach Anspruch 1, **dadurch gekennzeichnet, dass**
die Mittel der Gondel (2) als Luftkühler ausgeführt sind, so dass sich im Betrieb der Windkraftanlage ein Luft-Luftkühler mit einem primären geschlossenen und einen sekundären offenen Luftkühler ergibt, die thermisch gekoppelt sind.

3. Windkraftanlage nach einem der vorhergehenden Ansprüche,
**dadurch gekennzeichnet, dass**
die Rohre der Rohrbündel (6) oberflächenvergrößernde Konturen aufweisen.

4. Windkraftanlage nach einem der vorhergehenden Ansprüche,
**dadurch gekennzeichnet, dass**
das Rohrbündel (6) sich in der Gondel befindet.

## Claims

1. Wind power plant, having a generator (1) arranged in a nacelle (2), a turbine having at least one rotor blade, with at least the generator (1) having a closed primary cooling circuit, and with the nacelle (2) having means which enables the primary cooling circuit to be cooled,
**characterised in that**
the transition between the primary and secondary cooling circuits is carried out by means of a heat exchanger, which is designed as a tube bundle, with it being possible to align the tube bundle parallel to the wind direction such that the passage of air through the tube bundle (6) is increased and the cooling efficiency is thus improved.

2. Wind power plant according to claim 1,
**characterised in that**
the means of the nacelle (2) are designed as an air cooler, so that during the operation of the wind power plant an air-air cooler having a primary closed air cooler and a secondary open air cooler is produced, said air coolers being thermally coupled to one another.

3. Wind power plant according to one of the preceding claims,
**characterised in that**
the tubes of the tube bundle have surface-enlarging contours.

4. Wind power plant according to one of the preceding claims,
**characterised in that**
the tube bundle (6) is located in the nacelle.

## Revendications

1. Installation éolienne comprenant une génératrice ( 1 ) agencée dans une nacelle ( 2 ), une turbine ayant au moins une aube de rotor, au moins la génératrice ( 1 ) comprenant un circuit de refroidissement primaire fermé et la nacelle ( 2 ) ayant des moyens qui permettent un refroidissement du circuit de refroidissement primaire,
**caractérisée**
**en ce que** la transition entre circuit de refroidissement primaire et secondaire s'effectue au moyen d'un échangeur de chaleur, qui est réalisé sous la forme d'un faisceau de tubes, le faisceau de tubes pouvant être orienté parallèlement à la direction du vent de façon à augmenter le débit d'air dans les faisceaux de tubes ( 6 ) et à augmenter ainsi l'efficacité de refroidissement.

2. Installation éolienne suivant la revendication 1,
**caractérisée en ce que**
les moyens de la nacelle ( 2 ) sont réalisés en tant que refroidisseur à air de manière à donner, au cours du fonctionnement de l'installation éolienne, un refroidisseur air-air ayant un refroidisseur à air primaire, fermé, et un refroidisseur à air secondaire ouvert, qui sont couplés thermiquement.

3. Installation éolienne suivant l'une des revendications précédentes, **caractérisée en ce que**
les tubes des faisceaux de tubes ont des contours agrandissant leur surface.

4. Installation éolienne suivant l'une des revendications précédentes, **caractérisée en ce que**
le faisceau de tubes ( 6 ) se trouve dans la nacelle.
